# DEMANDE DE BREVET EUROPEEN

(11) **EP 0 793 390 A2**
(43) Date de publication de la demande: **03.09.1997**
(21) Numéro de dépôt: 97200472.5
(22) Date de dépôt: 18.02.1997
(51) Int. Cl.: H04N 7/50

(54) **Dispositif de décodage de signaux de type MPEG**

(30) Priorité: 28.02.1996 EP 96400424
(71) Demandeur: Philips Electronics N.V., 5621 BA Eindhoven (NL)
(72) Inventeur: Perrin, Jean-Philippe, Boulevard Haussmann 75008, Paris (FR)
(74) Mandataire: Landousy, Christian

(57) **Abrégé**

La présente invention concerne un dispositif de décodage de signaux numériques codés de type MPEG comprenant différents modules (M1, M2, M3,...), prévus pour communiquer avec une mémoire externe à accès aléatoire par l'intermédiaire d'un arbitreur (ARB) destiné à gérer les différents types d'accès. Le stockage en mémoire et la méthode d'adressage sont tels que le décodage est réalisable aussi bien avec une mémoire classique (DRAM) qu'avec les mémoires (DRAM) synchrones, l'arbitreur utilisant dans chaque cas les mêmes modes de communication et les autres modules restant inchangés.
Application : décodage selon la norme MPEG.

## Description

La présente invention concerne un dispositif de décodage de signaux numériques codés de type MPEG comprenant différents modules, dont au moins un module audio et un module vidéo, prévus pour communiquer avec une mémoire externe à accès aléatoire par l'intermédiaire d'un module d'interface dit arbitreur et destiné à gérer les différents types d'accès - à une ligne de points d'image, à une ligne de macrobloc MPEG, ou à un macrobloc dans des champs de parités opposées - aux images décodées.

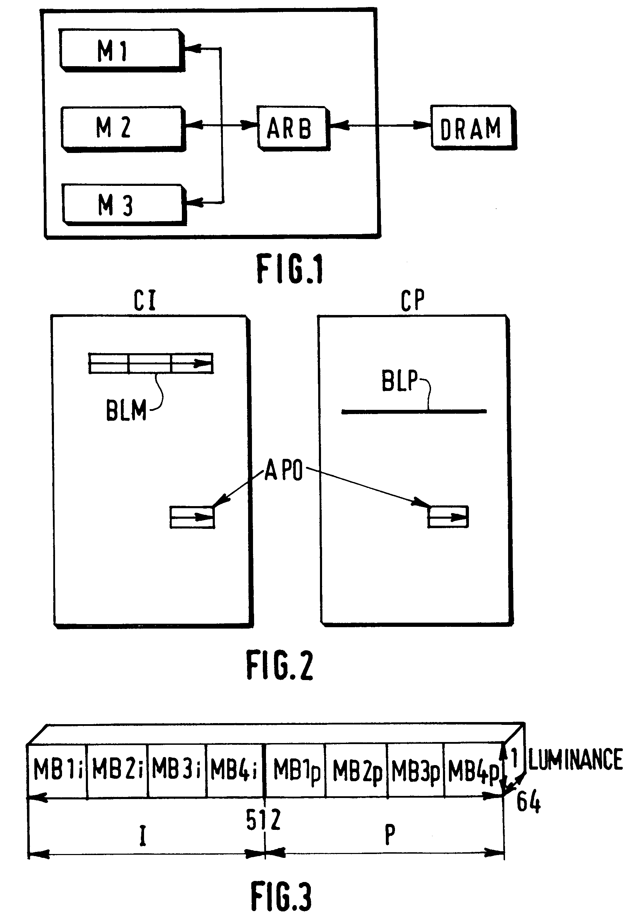

Le domaine d'application visé concerne le stockage des images décodées par un décodeur MPEG2 dans une mémoire externe de type DRAM (en anglais, Dynamic Random Access Memory). Comme l'illustre la figure 1 montrant très schématiquement un décodeur MPEG2, dans un tel décodeur différents modules (M₁, M₂, M₃...) accèdent à une mémoire DRAM externe par l'intermédiaire d'un module d'interface unique appelé "arbiter" (ou arbitreur). Cette mémoire permet notamment le rangement temporaire du flux des données comprimées, ainsi que le stockage des images décodées. L'arbitreur, noté ARB, gère pour l'ensemble des modules du décodeur les accès à cette mémoire externe (accès demandés par des blocs d'image qui ont à lire ou écrire des informations dans la mémoire). Les différents modules M1, M2, M3, etc... effectuent différents types d'accès aux images décodées, et notamment, comme illustré sur la figure 2 qui montre trois de ces types d'accès :
(A) des balayages par ligne de points d'image (notés BLP) ;
(B) des balayages par ligne de macrobloc MPEG (notés BLM) ;
(C) des accès à un macrobloc dans un champ de parité déterminée et au macrobloc correspondant dans le champ de parité opposée, notés APO (champ pair CP et champ impair CI, sur la figure 2).

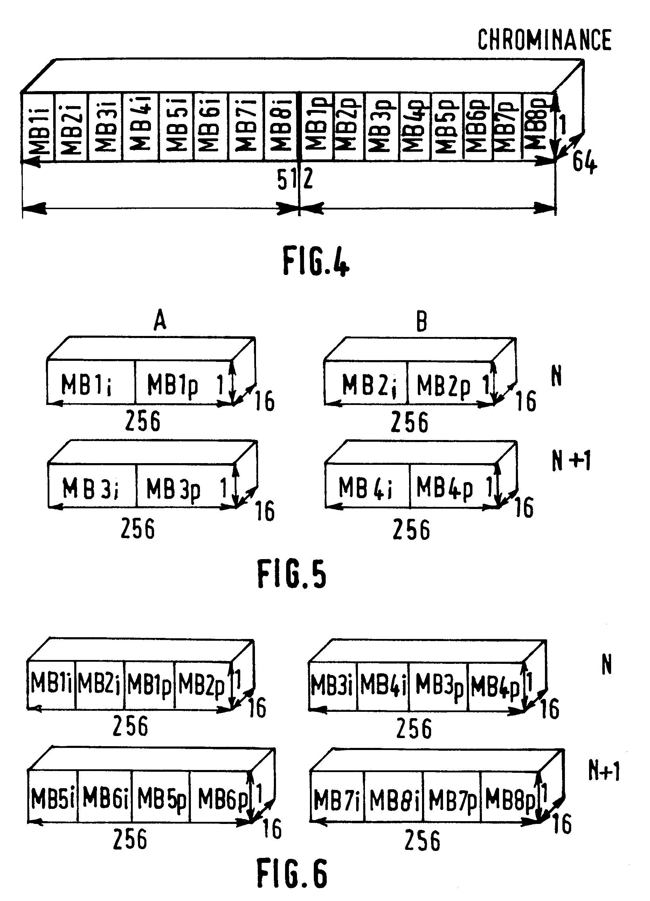

L'adressage de mémoires DRAM de type FPM ("Fast Page Mode"), mentionnées par exemple dans la demande de brevet WO 95/31874, est réalisé comme suit. Les données sont stockées en mots de 64 bits en séparant les informations de chrominance et de luminance. Dans une page de mémoire DRAM (= 512 mots de 64 bits) sont stockées, comme le montrent respectivement les figures 3 et 4:
- la luminance de 4 macroblocs MB1i, MB2i, MB3i, MB4i du champ impair (noté i) et la luminance des 4 macroblocs correspondants MB1p, MB2p, MB3p, MB4p dans le champ pair (noté p) ;
- la chrominance de 8 macroblocs du champ impair et la chrominance des 8 macroblocs correspondants dans le champ pair.

Cette organisation permet sans saut de page les accès suivants :
- accès aux lignes de macroblocs : 4 macroblocs de luminance consécutifs (8 pour la chrominance) ;
- accès aux lignes de pixels : 4*16 = 64 pixels de luminance consécutifs (64 pour la chrominance) ;
- accès aux macroblocs pair/impair : un tel accès est possible, car ils se trouvent par construction sur la même page de mémoire DRAM.

Cet adressage ne concerne cependant que les mémoires DRAM actuelles. Or d'autres types de mémoires, les mémoires SDRAM, décrites par exemple dans le document "Synchronous dynamic RAM", B. Prince et al., IEEE Spectrum, 29 (1992), October, n°10, pp 44 à 49 (ces mémoires DRAM synchrones font appel à une interface synchrone : les entrées et sorties de données sont synchronisées sur l'horloge), semblent appelées à les remplacer progressivement, en particulier en raison de leur vitesse de transfert supérieure.

Le but de l'invention est de proposer un dispositif de décodage dans lequel est défini un adressage mémoire permettant de disposer d'un module arbitreur capable de gérer les types de mémoire DRAM-FPM ou SDRAM, c'est-à-dire de toujours utiliser les mêmes modes de communication avec les autres modules.

A cet effet, l'invention concerne un dispositif tel que défini dans le préambule de la description et qui est en outre caractérisé en ce que ledit dispositif est compatible avec un arbitreur pour mémoires dites DRAM synchrones, ou SDRAM, organisées en deux bancs indépendants de 2048 pages physiques de 256 mots de 16 bits, l'accès auxdites mémoires SDRAM étant effectué par rafales de 4 mots de 16 bits et avec un adressage alternatif de chacun des deux bancs, pour un stockage de luminance et de chrominance effectué dans des conditions telles que la luminance de 4 macroblocs du champ impair (respectivement pair) d'une page de mémoire DRAM-FPM est, dans une mémoire SDRAM, également répartie dans les deux bancs et, pour chacun d'eux, dans deux pages successives de ces bancs, et de même la chrominance de 8 macroblocs du champ impair (respectivement pair) d'une page de mémoire DRAM-FPM est, dans une mémoire SDRAM également répartie dans les deux bancs et, pour chaque banc, dans deux pages successives.

Dans le dispositif de décodage ainsi proposé, la méthode d'adressage mise en oeuvre s'avère adaptée aux mémoires SDRAM, tout en garantissant la compatibilité avec la solution à base de mémoire DRAM, et en ne modifiant pas les communications entre l'arbitreur et les autres modules (pour passer d'un type de mémoire DRAM à l'autre, il suffit de changer l'arbitreur dans le dispositif de décodage, les modules qui communiquent avec lui restant inchangés). De plus, les opérations modifiées dans cet arbitreur pour gérer la conversion d'adresse convenant à l'adressage desdites mémoires DRAM synchrones sont très simples, et donc peu coûteuses.

Les particularités de l'invention apparaîtront maintenant de façon plus détaillée dans la description qui suit et en se référant aux figures, données à titre d'exemple et dans lesquelles :
- la figure 1 montre, dans un décodeur MPEG2, le rôle d'interface mémoire joué par le module arbitreur ;
- la figure 2 illustre différents types d'accès aux images décodées, dans la mémoire d'image, et les figures 3 et 4 concernent respectivement l'adressage des informations de luminance et de chrominance, dans une page de mémoire du type DRAM-FPM ;
- les figures 5 et 6 montrent, dans le cas de la mise en oeuvre de l'invention, le stockage de la luminance et de la chrominance (respectivement) d'une page de mémoire DRAM-FPM dans quatre pages de mémoire SDRAM ;
- la figure 7 est un diagramme de déroulement d'instructions qui illustre pour une mémoire SDRAM le contrôle du changement de banc dans l'arbitreur, et la figure 8 montre le diagramme similaire dans le cas des mémoires actuelles DRAM.

Dans le dispositif de décodage selon l'invention, l'arbitreur est maintenant en mesure de gérer non seulement une mémoire externe DRAM, mais aussi une mémoire de type SDRAM. Le stockage de la luminance, dans le cas d'une page de mémoire DRAM FPM, est illustré, on l'a vu, sur la figure 3. On y voit sur la même page la luminance de quatre macroblocs du champ impair (MB1i, MB2i, MB3i, MB4i) suivie de celle des quatre macroblocs correspondants du champ pair (MB1p, MB2p, MB3p, MB4p), le sous-ensemble de mémoire représenté ayant les dimensions suivantes : 512 x 64 x 1 bits. Le stockage de la chrominance, dans ce même cas d'une page de mémoire DRAM FPM, est illustré de façon similaire sur la figure 4 : on y voit, sur la même page, la chrominance de huit macroblocs du champ impair (MB1i à MB8i) suivie de celle des huit macroblocs correspondants du champ pair (MB1p à MB8p), le sous-ensemble ainsi représenté ayant les mêmes dimensions 512 x 64 x 1 bits que pour la luminance.

Par rapport à une mémoire DRAM, une mémoire SDRAM est constituée de deux bancs indépendants A et B de 2048 pages physiques chacun, et chaque page physique a une taille de 256 mots de 16 bits et est découpée en deux pages-mémoires logiques (paire et impaire) de 128 mots de 16 bits, soit le quart d'une page logique de mémoire DRAM-FPM. Le stockage de la luminance et de la chrominance est alors réalisé de façon modifiée, comme illustré sur les figures 5 et 6 respectivement. Pour la luminance de quatre macroblocs du champ impair et des quatre macroblocs correspondants du champ impair (figure 5), il y a maintenant égale répartition dans les deux bancs A et B de la mémoire SDRAM et, pour chacun d'eux, dans deux pages successives N et (N+1) de ces bancs. Les quatre sous-ensembles correspondants ont maintenant chacun pour dimensions : 216 x 16 x 1 bits, et sont regroupés selon la disposition suivante :
- banc A, page N : macroblocs 1 impair et pair ;
- banc B, page N : macroblocs 2 impair et pair ;
- banc A, page (N+1) : macroblocs 3 impair et pair ;
- banc B, page (N+1) : macroblocs 4 impair et pair ;
et ainsi de suite. De même, le stockage de la chrominance, pour une mémoire SDRAM, est maintenant effectué comme indiqué sur la figure 6, c'est-à-dire avec la même disposition répartie par banc (A et B) et, pour chaque banc, par page (N, N+1). Si la mémoire SDRAM est utilisée en mode dit "par rafale de 4", il est possible de passer du banc A au banc B et réciproquement sans perte de temps si les accès dans chacun des bancs concernent au moins 8 mots de 16 bits (4 mots pour les premier et dernier accès).

Pour obtenir des performances similaires à celles d'une mémoire DRAM standard, l'organisation des accès est maintenant la suivante :
- ligne de macroblocs : accès possibles à un nombre illimité de macroblocs de façon linéaire, car chaque groupe de deux macroblocs successifs se trouve dans deux bancs opposés, les deux accès successifs étant donc faits sans perte de temps pour faire un saut de page ;
- ligne de pixels : dans ce cas, on lit 16 pixels par macrobloc, il est donc possible de faire des changements de banc sans perte de cycle, et l'on peut accéder de façon illimitée aux lignes de pixels ;
- macroblocs pair/impair : accès possibles, car un macrobloc et son correspondant de parité opposée se trouvent toujours dans la même page de mémoire SDRAM.

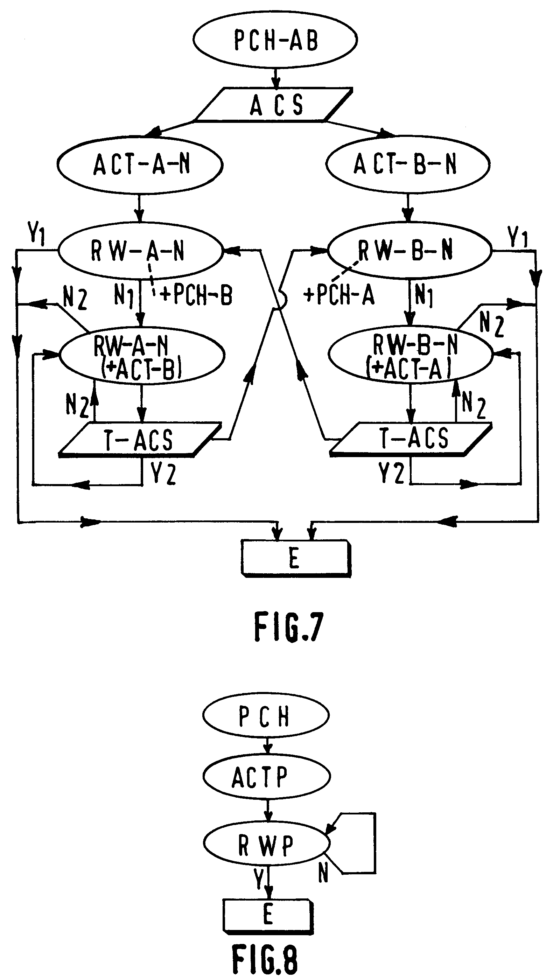

Ces différents accès avec changements automatiques de banc en fonction des adresses à lire ou à écrire sont illustrés sur le diagramme de la figure 7. Les opérations ainsi effectuées commencent par la précharge des deux bancs (PCH-AB), suivie du premier accès ou du prochain accès considéré, noté ACS. Selon que l'accès demandé concerne une zone mémoire du banc A ou du banc B, le banc correspondant (à la page concernée, N par exemple) est activé (ACT-A-N, ou ACT-B-N) puis la lecture ou l'écriture demandée dans ce banc est effectuée (RW-A-N, ou RW-B-N), pendant que l'autre banc est préchargé. En sortie de cette opération, si l'accès effectué était le dernier (connexion Y1), les opérations sont terminées, et la fin d'accès est notée E sur la figure 7. Si l'accès n'était pas le dernier (connexion N1), une nouvelle lecture ou écriture dans le même banc est effectuée, avec activation simultanée de l'autre banc (ACT-B ou ACT-A). Un test est ensuite effectué (T-ACS), pour déterminer s'il y a un prochain accès demandé, ou s'il s'agissait du dernier. Dans la première situation (connexion Y2), le banc B est prêt et il peut y avoir rebouclage, selon le cas, sur l'opération de lecture/écriture dans le banc A ou B, page N, avec activation de l'autre banc. Dans la seconde situation (connexion N2), les opérations sont terminées (fin d'accès E). Pour que le principe fonctionne bien, il faut deux accès consécutifs dans le même banc, sauf pour le dernier accès ou pour un accès unique.

Ce contrôle par l'arbitreur des accès avec changements de banc dans la mémoire SDRAM est à comparer avec le contrôle similaire dans le cas d'une mémoire DRAM-FPM, illustré sur la figure 8 et comprenant les simples opérations suivantes : précharge (PCH), activation d'une page N(ACTP), lecture/écriture dans cette page (RWP), test (Y/N) de dernier accès, avec réadressage si la réponse est négative ou fin d'accès (E) si elle est positive.

Pour être utilisée de façon compatible avec une mémoire DRAM-FPM ou avec une mémoire SDRAM, l'invention ainsi décrite ne doit concerner, dans le décodeur MPEG, que l'arbitreur. Pour que la sélection de la mémoire effectivement utilisée ne concerne effectivement que ce module, on limite la taille des accès à la taille de ceux qui sont possibles avec la solution DRAM-FPM, et l'on garde en interne, entre l'arbitreur et les autres modules, un adressage linéaire sur 18 bits, l'arbitreur utilisant ces 18 bits d'adresse interne, dans le cas du contrôle des accès à la mémoire DRAM, pour donner les numéros de page et de colonne, et, dans le cas du contrôle des accès à la mémoire SDRAM, pour sélectionner le banc, le numéro de page, la parité du champ, et le mot de 64 ou de 16 bits. Le but d'adresses entre les modules et l'arbitreur est inchangé. L'arbitreur effectue sur ce bus un traitement qui est fonction du type de mémoire DRAM connecté :
- si par exemple A[17:0] est la taille du bus d'adresse envoyé par les modules à l'arbitreur, ce dernier interprète le bus, pour une mémoire DRAM-FPM, de la façon suivante : A[17:9] = numéro de page, et A[8:8] = numéro de colonne ;
- pour une mémoire SDRAM, on a par exemple : A[5] = sélection du banc, A[17:8,6] = numéro de page, A[7] = sélection paire/impaire (soit colonnes 0 à 127, soit colonnes 128 à 255, partie haute ou basse de la page) et A[4:0] = sélection du mot de 64 bits.

## Revendications

1. Dispositif de décodage de signaux numériques codés de type MPEG comprenant différents modules (M₁, M₂, M₃,...), dont au moins un module audio et un module vidéo, prévus pour communiquer avec une mémoire externe à accès aléatoire de type DRAM-FPM par l'intermédiaire d'un module d'interface dit arbitreur et destiné à gérer les différents types d'accès - à une ligne de points d'image, à une ligne de macrobloc MPEG, ou à un macrobloc dans des champs de parités opposées - aux images décodées, caractérisé en ce que ledit dispositif est compatible avec un arbitreur pour mémoires dites DRAM synchrones, ou SDRAM, organisées en deux bancs indépendants de 2048 pages physiques de 256 mots de 16 bits, l'accès auxdites SDRAM étant effectué par rafales de 4 mots de 16 bits et avec un adressage alternatif de chacun des deux bancs, pour un stockage de luminance et de chrominance effectué dans des conditions telles que la luminance de 4 macroblocs du champ impair (respectivement pair) d'une page de mémoire DRAM-FPM est, dans une mémoire SDRAM, également répartie dans les deux bancs et, pour chacun d'eux, dans deux pages successives de ces bancs, et de même la chrominance de 8 macroblocs du champ impair (respectivement pair) d'une page de mémoire DRAM-FPM est, dans une mémoire SDRAM, également répartie dans les deux bancs et, pour chaque banc, dans deux pages successives.
